# EUROPÄISCHE PATENTSCHRIFT

(11) **EP 2 125 462 B1**
(45) Veröffentlichungstag und Bekanntmachung des Hinweises auf die Patenterteilung: **14.07.2010**
(21) Anmeldenummer: 08708377.0
(22) Anmeldetag: 29.01.2008
(51) Int. Cl.: B60T 1/10, B60T 13/58, B60T 17/22

(54) **VERSCHLEISSORIENTIERTES BREMSMANAGEMENT**
ANTI-WEAR BRAKE MANAGEMENT
GESTION DE FREINAGE ANTI-USURE

(30) Priorität: 02.02.2007 DE 102007006131
(43) Veröffentlichungstag der Anmeldung: 02.12.2009
(73) Patentinhaber: Siemens Aktiengesellschaft, 80333 München (DE)
(72) Erfinder: GUTSCHI, Daniela, A-1010 Wien (AT); HEIDORN, Daniel, A-8047 Graz (AT); STOCKER, Werner, A-8792 St.Peter Freienstein (AT)
(86) Internationale Anmeldenummer: PCT/EP2008/051060
(87) Internationale Veröffentlichungsnummer: WO 2008/092867

(56) Entgegenhaltungen:
- WO-A-2004/054840
- DE-B4- 10 049 678
- GB-A- 1 506 005

## Beschreibung

Die Erfindung betrifft ein Verfahren zum Abbremsen eines schienengeführten Fahrzeuges mit Triebachsen, die jeweils mit einer elektrodynamischen Bremse unter einer Triebachsenreibbremse ausgerüstet sind, und mit Laufachsen, die mit einer Laufachsenreibbremse ausgerüstet sind, bei dem bei einem Bremsvorgang zunächst die elektrodynamische Bremse betätigt wird, bei nicht ausreichender Bremsverzögerung anschließend die Triebachsenreibbremse betätigt wird und schließlich die Laufachsenreibbremse betätigt wird.

Ein solches Verfahren ist beispielsweise aus der DE 100 49 678 B4 bereits bekannt. Dort ist ein Verfahren zum Bremsmanagement beschrieben, das bei einem schienengeführten Fahrzeug eingesetzt wird. Das schienengeführte Fahrzeug weist von einem Elektromotor angetriebene Triebachsen und nicht angetriebene Laufachsen auf. Sowohl die Trieb- als auch die Laufachsen sind mit Reibbremsen ausgerüstet. Darüber hinaus ist ein elektrodynamisches Bremsen der Triebachsen möglich, bei dem der Elektromotor dann als Generator wirkt. Die beim elektrodynamischen Bremsen gewonnene Energie wird entweder in ein Versorgungsnetz zurückgespeist oder von einem Bremswiderstand in Wärme umgewandelt. Da die elektrodynamische Bremse im Vergleich zu den Reibbremsen nahezu verschleißfrei arbeitet, wird diese bevorzugt aktiviert. Bei dem Bremsvorgang wird daher von einem so genannten Bremssteuergerät zunächst die elektrodynamische Bremse aktiviert. Erst anschließend werden die Reibbremsen zugeschaltet, bis eine angeforderte Sollbremskraft erreicht ist. Um die Belastung der Bremsscheiben und somit den Verschleiß der Bremsscheiben gleichmäßig auf die Reibbremsen der Laufachsen und die Reibbremsen der Triebachsen zu verteilen, wird die Temperatur der jeweiligen Bremsscheiben ermittelt, wobei die Bremssteuerung die Bremskraft so auf die Reibbremsen aufteilt, dass sich beim Bremsen an den Bremsscheiben in etwa die gleiche Temperatur einstellt. Das vorbekannte Verfahren führt zwar zu einem verschleißoptimierten Bremsmanagement und einer gleichmäßigen Aufteilung der Bremsscheibenbelastung. Der Einsatz und die Verwendung des Verfahrens in einem Schienenfahrzeug ist jedoch aufwändig und kostenintensiv.

Aufgabe der Erfindung ist es daher ein Verfahren der eingangs genannten Art bereitzustellen, das kostengünstig ist, wobei gleichzeitig ein vorschnelles Abnutzen der Bremsscheiben oder der Bremsbeläge von Reibbremsen vermieden ist.

Die Erfindung löst diese Aufgabe dadurch, dass die Laufachsenreibbremse dann betätigt wird, wenn eine zuvor festgelegte maximale Bremsleistung der Triebachsenreibbremse erreicht wird.

Gemäß dem Stand der Technik wurden bislang beim verschleißorientierten Bremsen zunächst die elektrodynamische Bremse und anschließend die Reibbremsen der Laufachsen betätigt. Dabei ist die durch die Laufachsenreibbremse bereitgestellte Bremskraft in der Regel ausreichend, um die angeforderte Bremskraft als Bremssollkraft bereitzustellen. Eine Betätigung der Triebachsenreibbremse unterblieb daher vielfach, so dass die Belastung der Reibbremsen ungleichmäßig war und auf die Laufachsenreibbremsen konzentriert blieb. Um diesem Misstand auf einfache und kostengünstige Art und Weise abzuhelfen, wird erfindungsgemäß vorgeschlagen, zunächst die Triebachsenreibbremse auszulösen. Gemäß dem eingangs genannten Stand der Technik erfolgt eine solche Auslösung - wenn überhaupt - zufällig in Folge einer Auswertung der erfassten Temperaturen der Bremsscheiben der Reibbremse. Eine solche aufwändige Temperaturmessung entfällt jedoch im Rahmen der Erfindung. Erfindungsgemäß werden stattdessen zunächst immer die Triebachsenreibbremsen betätigt. Erst wenn die Bremskraft der Triebachsenreibbremse eine vorgegebene maximale Bremskraft überschreitet, kommt es zum Einsatz der Laufachsenreibbremsen. Die maximale Bremskraft kann auf Grundlage beliebiger Überlegungen festgelegt werden. Zweckmäßigerweise wird der Leistungseintrag in die Bremsscheiben der Triebachsenreibbremsen ermittelt. Dies erfolgt sowohl unter Ermittlung der aktuell eingeleiteten Bremskraft und unter Ermittlung der Geschwindigkeit des Fahrzeugs beispielsweise mittels Achsdrehzahlgebern. Übersteigt der ermittelte Leistungseintrag, also die Bremsleistung der Triebachsenreibbremse, einen vorgegebenen Schwellenwert, werden die Laufachsenreibbremsen aktiviert. Eine alleinige Belastung der Laufachsenreibbremsen ist somit vermieden. Der Schwellenwert wird gemäß dieser Weiterentwicklung der Erfindung so ausgewählt, dass eine irreversible Beschädigung der Reibbremsen, also insbesondere der Bremsscheibe und der Bremsbeläge der Triebachsenreibbremse vermieden wird. Abweichend davon wird die maximale Bremskraft in Abhängigkeit der Bremskraft der elektrodynamischen Bremse und in Abhängigkeit einer vorgegebnen Sollbremskraft festgelegt. Hierauf wird später noch genauer eingegangen.

Vorteilhafterweise erfasst ein Messsensor, die von einem Stellglied der Triebachsenreibbremse erzeugte Bremskraft unter Gewinnung eines Bremsistwertes und überträgt die Bremsistwerte an eine Steuerungseinheit.

Gemäß einer diesbezüglichen Weiterentwicklung ermittelt eine Steuerungseinheit ausgehend von den Bremsistwerten anhand einer in ihr implementierten Logik die Bremsleistung und löst eine Betätigung der Laufachsenreibbremse aus, wenn die Bremsleistung eine maximale Bremsleistung überschreitet.

Gemäß einer bevorzugten Weiterentwicklung der Erfindung erfasst ein Drucksensor den Druck eines Bremszylinders unter Gewinnung eines Bremsistdruckes als Bremsistwert, wobei der Bremsistwert in eine Bremskraft umgerechnet wird. Der im Bremszylinder erzeugte Druck ist auf einfache Art und Weise in eine Bremskraft umrechenbar. Dabei wird vorteilhafterweise von dem Zusammenhang Druck gleich Kraft pro Fläche ausgegangen. Ist die bewegliche Fläche des Bremszylinders bekannt, auf die der Druck des Bremszylinders wirkt, kann die Bremskraft auf einfache Art und Weise berechnet werden. Die Bremsleistung p ergibt sich aus dem Produkt der ermittelten Geschwindigkeit v des Fahrzeuges und der Bremskraft F gemäß p=v*F. Zur Ermittlung der Bremsleistung p ist daher auch die Ermittlung der Geschwindigkeit v erforderlich. Diese kann aus den Daten der Achsdrehzahlgeber ermittelt werden, die ebenfalls mit der Steuerungseinheit verbunden sind. Achsdrehzahlgeber und die Ermittlung der Geschwindigkeit des Fahrzeugs sind dem Fachmann jedoch bestens bekannt, so dass an dieser Stelle hierauf nicht detailliert eingegangen zu werden braucht.

Gemäß einer weiteren vorteilhaften Ausgestaltung der Erfindung wird die maximale Bremsleistung der Treibachsenreibbremse in Abhängigkeit einer vorgegebenen Sollbremskraft festgelegt. Die Sollbremskraft wird beispielsweise aufgrund von Erfahrungswerten festgelegt.

Gemäß einer weiteren zweckmäßigen Weiterentwicklung ist die maximale Bremskraft gleich der die Differenz zwischen der Sollbremskraft und der Bremskraft der elektrodynamischen Bremse. Die Sollbremskraft µ ist beispielsweise dir für jede Achse gewünschte Bremskraft. Auf diese Weise ist die Bremskraft für jede Achse gleich.

Weitere zweckmäßige Ausgestaltungen und Vorteile der Erfindung sind Gegenstand der nachfolgenden Beschreibung eines Ausführungsbeispiels der Erfindung unter Bezug auf die Figuren der Zeichnung, wobei gleiche Bezugszeichen auf gleich wirkende Bauteile verweisen und wobei
- Figur 1: eine schematische Darstellung eines schienen- geführten Fahrzeuges mit Lauf- und Triebachsen und
- Figur 2: eine schematische Darstellung zur Verdeutli- chung eines Ausführungsbeispiels des erfin- dungsgemäßen Verfahrens zeigen.

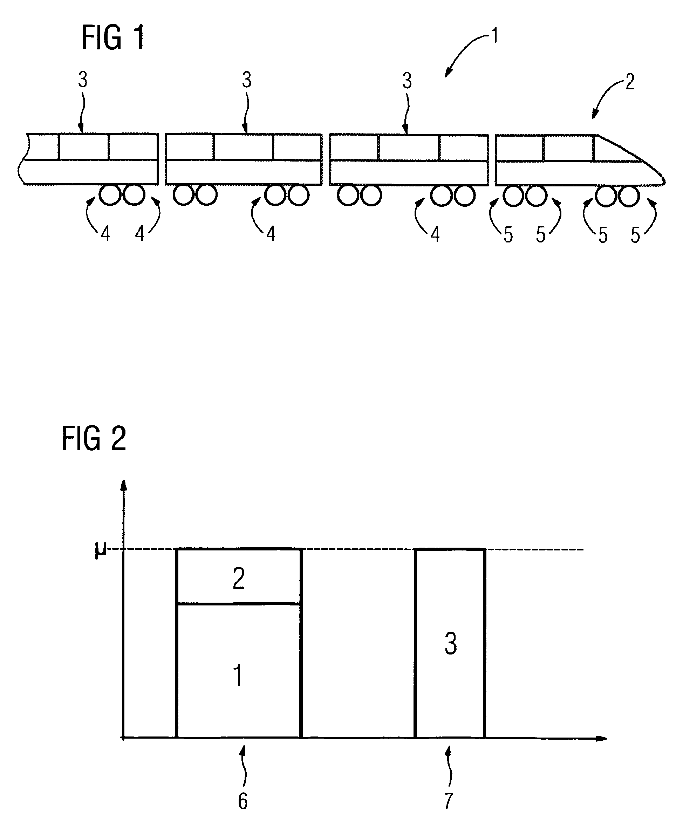

Figur 1 zeigt ein Schienenfahrzeug 1, das in dem gezeigten Ausführungsbeispiel einen Triebwagen 2 sowie mehrere von den Triebwagen 2 gezogene Personenwagen 3 umfasst. Jeder Personenwagen 3 verfügt über zwei Drehgestelle mit jeweils zwei Radsätzen, die jeweils zwei schienengeführte Räder aufweisen. Die Räder sind über eine drehfest an ihnen angebrachte Radachse miteinander gekoppelt. Die Radachsen der Personenwagen 3 sind nicht angetrieben und werden daher hier im Folgenden als Laufachsen 4 bezeichnet. Die Radachsen des Triebwagens 2 sind jeweils von einem Elektromotor angetrieben und werden daher Triebachsen 5 genannt. Der Triebwagen 2 umfasst in dem gezeigten Ausführungsbeispiel vier Triebachsen 5. Jeder Personenwagen 3 weist vier Laufachsen 4 auf.

Es sei an dieser Stelle angemerkt, dass die Aufteilung der Triebachsen 4 und der Laufachsen 5, die in Figur 1 gezeigt ist, rein beispielhaft zu verstehen ist. Bei einem abweichenden Ausführungsbeispiel verfügt beispielsweise jeder Personenwagen und jeder Triebwagen über eine oder zwei Triebachsen und über drei beziehungsweise zwei Laufachsen.

Wie bereits ausgeführt wurde, ist jede Triebachse 5 des Triebwagens 2 mit einer elektrodynamischen Bremse ausgerüstet. Hierzu wird der Elektromotor der Triebachse als Generator betrieben, wobei die vom Generator beim Bremsen erzeugte elektrische Energie entweder in ein in Figur 1 nicht gezeigtes Versorgungsnetz zurückgespeist oder von einem Bremswiderstand in Wärmeenergie umgewandelt wird. Darüber hinaus verfügt jede Triebachse 5 über eine Triebachsenreibbremse, die in diesem beispielhaften Fall eine pneumatische Reibbremse ist. Die pneumatische Triebachsenreibbremse verfügt über eine Druckluftversorgung, pneumatische Bremsventilen und einen Bremszylinder, in dem eine Bremssteuerungseinheit mittels des Bremsventils einen zuvor vorgegebenen Bremsdruck einstellt. Der Bremszylinder verfügt über einen beweglich geführten Bremskolben, in dem in Abhängigkeit des Bremsdruckes eine Bremskraft erzeugt wird. Die Bremskraft wird mit einer zweckmäßigen Hebelmechanik in einen Bremsbelag eingeleitet, der einer Bremsscheibe zugewandt ist, gegen die der Bremsbelag bei einem Bremsvorgang mit der Bremskraft unter Reibschluss gepresst wird.

Die Laufachsen 4 der Personenwagen 3 sind lediglich mit Laufachsenreibbremsen ausgerüstet, die von ihrem Aufbau den zuvor beschriebenen Triebachsenreibbremsen im Wesentlichen entsprechen. Der pneumatische Druck in den Bremszylinder der Laufachsenreibbremse und der Triebachsenreibbremse wird in dem gezeigten Ausführungsbeispiel durch eine gemeinsame Steuerungseinheit mittels der besagten Bremsventile festgelegt. Hierzu steuert die Steuerungseinheit die jeweiligen Bremsventile elektronisch an.

Das dieser Ansteuerung zugrunde liegende Ausführungsbeispiel des erfindungsgemäßen Verfahrens ist in Figur 2 verdeutlicht. In dem Diagramm ist auf der Ordinate die Bremskraft µ abgetragen, wobei auf die erste Säule 6 die Bremskraft der Bremsen der Triebachsen und die zweite Säule 7 die Bremskraft der Laufachsen dargestellt. Mit den Ziffern 1, 2, 3 wird die Reihenfolge der Betätigung der jeweiligen Bremse durch die Steuerungseinheit festgelegt. So wird zunächst die elektrodynamische Bremse 1 betätigt, die einen Großteil der Bremskraft für die Triebachse bereitstellt. Anschließend kommt es zur Betätigung der Triebachsenreibbremse 2, bis in Summe ein vorgegebener Schwellenwert p, also eine Sollbremskraft für jede Achse, erreicht ist. Erst dann kommt es zur Betätigung der Laufachsenreibbremse, wobei die Bremskraft gleichmäßig auf Laufachsen 5 und Triebachsen 4 verteilt ist.

## Patentansprüche

1. Verfahren zum Abbremsen eines schienengeführten Fahrzeuges mit Triebachsen (5), die jeweils mit einer elektrodynamischen Bremse unter einer Triebachsenreibbremse ausgerüstet sind, und mit Laufachsen (4), die mit einer Laufachsenreibbremse ausgerüstet sind, bei dem bei einem Bremsvorgang zunächst die elektrodynamische Bremse betätigt wird, bei nicht ausreichender Bremsverzögerung anschließend die Triebachsenreibbremse betätigt wird und schließlich die Laufachsenreibbremse betätigt wird,
**dadurch gekennzeichnet, dass**
die Laufachsenreibbremse dann betätigt wird, wenn eine zuvor festgelegte maximale Bremsleistung der Triebachsenreibbremse erreicht wird.

2. Verfahren nach Anspruch 1,
**dadurch gekennzeichnet, dass**
ein Messsensor die von einem Stellglied der Triebachsenreibbremse erzeugte Bremskraft unter Gewinnung von Bremsistwerten erfasst und die Bremsistwerte an eine Steuereinheit überträgt.

3. Verfahren nach Anspruch 1 oder 2,
**dadurch gekennzeichnet, dass**
eine Steuerungseinheit ausgehend von den Bremsistwerten mittels einer internen Logik die aktuelle Bremsleistung ermittelt und die Betätigung der Laufachsenreibbremse auslöst, wenn die ermittelte Bremsleistung der Triebachsenbremse eine maximale Bremsleistung überschreitet.

4. Verfahren nach Anspruch 2 oder 3,
**dadurch gekennzeichnet, dass**
ein Drucksensor den Druck eines Bremszylinders unter Gewinnung eines Bremsistdruckes als Bremsistwert erfasst, wobei der Bremsistdruck in eine Bremskraft umgerechnet wird.

5. Verfahren nach einem der vorhergehenden Ansprüche,
**dadurch gekennzeichnet, dass**
die maximale Bremsleistung der Treibachsenreibbremse in Abhängigkeit einer vorgegebenen Sollbremskraft festgelegt wird.

6. Verfahren nach Anspruch 5,
**dadurch gekennzeichnet, dass**
die maximale Bremskraft gleich der die Differenz zwischen einer Sollbremskraft und der Bremskraft der elektrodynamischen Bremse ist.

## Claims

1. Method for braking a rail-bound vehicle with driven axles (5) which are each equipped with an electrodynamic brake under a driven axle friction brake, and with running axles (4) which are equipped with a running axle friction brake and in which, in the case of a braking process, the electrodynamic brake is firstly activated and, if the braking deceleration is not sufficient, the driven axle friction brake is subsequently activated and finally the running axle friction brake is activated,
**characterized in that**
the running axle friction brake is activated if a previously defined maximum braking power of the driven axle friction brake is reached.

2. Method according to Claim 1,
**characterized in that**
a measurement sensor senses the braking force generated by an actuator element of the driven axle friction brake accompanied by the acquisition of brake actual values, and transmits the brake actual values to a control unit.

3. Method according to Claim 1 or 2,
**characterized in that**
a control unit acquires the current braking power on the basis of the brake actual values by means of an internal logic and triggers the activation of the running axle friction brake if the acquired braking power of the driven axle brake exceeds a maximum braking power.

4. Method according to Claim 2 or 3,
**characterized in that**
a pressure sensor senses the pressure of a brake cylinder accompanied by the acquisition of a brake actual pressure as a brake actual value, wherein the brake actual pressure is converted into a braking force.

5. Method according to one of the preceding claims,
**characterized in that**
the maximum braking power of the driven axle friction brake is defined as a function of a predefined set point braking force.

6. Method according to Claim 5,
**characterized in that**
the maximum braking force is equal to the difference between a set point braking force and the braking force of the electrodynamic brake.

## Revendications

1. Procédé de freinage d'un véhicule guidé sur rail ayant des essieux ( 5 ) moteurs, qui sont équipés respectivement d'un frein électrodynamique sous un frein à friction d'essieux moteurs, et des essieux ( 4 ) porteurs, qui sont équipés d'un frein à friction d'essieu porteur, dans lequel, lors d'une opération de freinage, on actionne d'abord le frein électrodynamique, si le ralentissement de freinage n'est pas suffisant on actionne ensuite le frein à friction d'essieux moteurs et finalement on actionne le frein à friction d'essieux porteurs,
**caractérisé en ce que** l'on actionne le frein à friction d'essieux porteurs lorsqu'une puissance de freinage maximum fixée à l'avance du frein à friction d'essieux moteurs est atteinte.

2. Procédé suivant la revendication 1,
**caractérisé en ce qu'**un capteur de mesure détecte, en obtenant des valeurs réelles de freinage, la force de freinage produite par un actionneur du frein à friction d'essieux moteurs et transmet les valeurs réelles de freinage à une unité de commande.

3. Procédé suivant la revendication 1 ou 2,
**caractérisé en ce qu'**une unité de commande détermine la puissance instantanée de freinage à partir des valeurs réelles de freinage au moyen d'une logique interne et déclenche l'actionnement du frein à friction d'essieux porteurs si la puissance de freinage déterminée du frein d'essieux moteurs dépasse une puissance maximum de freinage.

4. Procédé suivant la revendication 2 ou 3,
**caractérisé en ce qu'**un capteur de pression détecte la pression d'un cylindre de frein, en obtenant une pression réelle de freinage comme valeur réelle de freinage, la pression réelle de freinage étant recalculée en une force de freinage.

5. Procédé suivant l'une des revendications précédentes,
**caractérisé en ce que** l'on fixe la puissance maximum de freinage du frein à friction d'essieux moteurs en fonction d'une force de freinage de consigne prescrite.

6. Procédé suivant la revendication 5,
**caractérisé en ce que** la force maximum de freinage est égale à la différence entre une force de freinage de consigne et la force de freinage du frein électrodynamique.
